# EUROPÄISCHE PATENTSCHRIFT

(11) **EP 2 143 667 B1**
(45) Veröffentlichungstag und Bekanntmachung des Hinweises auf die Patenterteilung: **12.01.2011**
(21) Anmeldenummer: 09165349.3
(22) Anmeldetag: 13.07.2009
(51) Int. Cl.: B65G 1/02, B65G 1/04, G07F 11/62

(54) **Lagereinrichtung für Stückgüter und zugehöriges Verfahren**
Storage device for bulk goods and corresponding method
Dispositif de stockage pour marchandises et procédé correspondant

(30) Priorität: 11.07.2008 EP 08160259
(43) Veröffentlichungstag der Anmeldung: 13.01.2010
(73) Patentinhaber: Rowa Automatisierungssysteme GmbH, 53539 Kelberg (DE)
(72) Erfinder: Wagner, Rudolf M., 54550 Daun (DE)
(74) Vertreter: Zenz

(56) Entgegenhaltungen:
- DE-U1-202007 018 223
- US-A- 5 211 296

## Beschreibung

Die Erfindung betrifft eine Lagereinrichtung für Stückgüter, mit einer Mehrzahl übereinander angeordneter Lagerböden mit ebenen Lagerflächen, wobei auf jeder Lagerfläche eine Mehrzahl von Stückgütern nebeneinander lagern können.

Aus der Technik sind verschiedene Arten von Vorrichtungen zur Lagerung von Stückgütern bekannt. Insbesondere im Bereich der automatisierten Apothekenlager für Arzneimittel kommen Lagersysteme zum Einsatz, bei denen die Stückgüter (Arzneimittelpackungen) mit einer computergesteuerten Greifvorrichtung, einem Bediengerät, aufgenommen und auf Lagerplätzen deponiert werden. Im Bedarfsfall wird eine Packung wieder von ihrem Lagerort aufgenommen oder entnommen und zu einer Ausgabe befördert.

Bei einigen dieser Lagerkonzepte werden die Stückgüter in horizontalen Lagerböden oder Schächten hintereinander gelagert. Ein Beispiel für eine solche Lagereinrichtung ist in der Patentanmeldung EP 1524209 A1 offenbart. Bei diesen Lagereinrichtungen wird von der Stirnseite einer Lagerfläche auf die Stückgüter zugegriffen. Wird ein weiter hinten liegendes Stückgut benötigt, so werden die davor liegenden Stückgüter zeitweise entnommen, um an das dahinter befindliche Stückgut zu gelangen.

Patent US 5 211 296 offenbart eine Lagereinrichtung in den der vertikale Abstand zwischen zwei beliebigen in vertikaler Richutng benachbarten Lagerböden vergrößerbar ist.

Bei anderen automatischen Lagersystemen wird das seit langem bekannte Konzept der Apothekerschubladen aufgegriffen. Es wird ein Schubladenschrank verwendet, wobei die Schubladenböden als Lagerböden fungieren. Um eine Packung auf einem solchen Lagerboden zu deponieren, wird die Schublade ausgezogen. Dann wird eine Packung mit einem automatisierten Bediengerät auf einem freien Lagerplatz eingelagert oder eine Packung wird der Schublade entnommen. Die Schublade wird anschließend wieder geschlossen.

Die bekannten Lagerkonzepte weisen jedoch Nachteile auf. So ermöglichen einige Lagerkonzepte zwar die schnelle Ein- und Auslagerung, nutzen jedoch den zur Verfügung stehenden Lagerraum nicht optimal aus. Raum- oder flächenoptimierte Lagerkonzepte hingegen weisen oft Schwächen hinsichtlich der Zugriffsgeschwindigkeit und der mechanischen Komplexität und Fehleranfälligkeit auf.

Aufgabe der Erfindung ist es daher, ein hinsichtlich Raumnutzung und Flexibilität optimiertes Lagersystem für Stückgüter zur Verfügung zu stellen.

Die Aufgabe wird erfindungsgemäß durch eine Vorrichtung gemäß Patentanspruch 1 sowie ein Verfahren gemäß Patentanspruch 15 gelöst.

Gemäß der Erfindung können die Lagerböden oder Lagerflächen, die vertikal übereinander angeordnet sind, in ihrem Abstand zueinander verändert werden. So kann für den Zugriff auf einen Lagerboden der Abstand dieses Lagerbodens von dem darüber gelegenen Lagerboden vergrößert werden, so dass sich ein ausreichender Abstand ergibt, um ein Bediengerät zwischen die Lagerböden zu bringen. Dieses Bediengerät hat dann von oben freien Zugriff auf die Stückgüter des unteren der beabstandeten Lagerböden und kann auf diesen zugreifen und die Stückgüter ein- und auslagern. Der Abstand wird nur für den Zugriff vergrößert und nach dem Zugriff wieder verringert, um die vertikale Ausdehnung des Stapels jederzeit gering zu halten (optimale Raumausnutzung).

Die Lagerböden werden erfindungsgemäß nur vertikal zueinander verschoben oder verfahren, um dem Bediengerät ausreichend Platz für einen Zugriff zu bieten. Die Lagerböden brauchen sich dabei nicht in horizontaler Richtung zu verschieben, wie beispielsweise bei einem Schubladensystem, um den Zugriff auf einen Lagerboden zu ermöglichen. Da die Auslenkung im Wesentlichen in vertikaler Richtung erfolgt, ist eine in ihrer horizontalen Erstreckung äußerst kompakte Anlage möglich. Die eigentliche Lagerung erfolgt demnach bei reduzierter vertikaler Ausdehnung. Für den Zugriff wird der Abstand der Lagerböden zeitweise vergrößert, das Bediengerät zwischen die Lagerböden in den vergrößerten Abstand gefahren und von oben auf die gelagerten Stückgüter zugegriffen. Das Bediengerät fährt dann wieder aus dem Zugriffsraum zwischen den Lagerböden heraus und die Lagerböden werden wieder aufeinander gebracht, um die reduzierten vertikalen Abmessungen wieder herzustellen. Auf diese Weise ist der Zugriff auf jede der Lagerböden der Lagerböden möglich; der für den Zugriff von oben erforderliche Arbeitsraum (Zugriffsraum), in dem sich das Bediengerät bewegen kann, ist jedoch nur zeitweise über derjenigen Lagerfläche bereitgestellt, auf die der Zugriff erfolgen soll.

Ein wesentliches Merkmal der Erfindung besteht demnach darin, dass der Zugriff auf die Stückgüter in einem zeitweise vergrößerten Arbeitsraum (Zugriffsraum) erfolgt, wobei das Bediengerät in den Zugriffsraum zwischen die Lagerböden gebracht wird und von oben auf die Stückgüter zugreift. Durch diesen Zugriff von oben kann eine chaotische Lagerung der Stückgüter erfolgen und gezielt, nach Abfrage der Lagerposition aus einem Steuersystem, auf jedes der Stückgüter zugegriffen werden, ohne vorher ein anderes Stückgut aus dem Weg räumen zu müssen. Der Zugriff von oben würde bei herkömmlichen Lagern zu erheblichen Abmessungen führen, da oberhalb jedes Lagerbodens ein Arbeitsraum bereitzustellen wäre, der ein Einfahren des Bediengerätes sowie ein Bewegen eines ein- oder auszulagernden Stückgutes oberhalb der bereits gelagerten Stückgüter erlaubt.

Das erfindungsgemäße System räumt diesen Nachteil aus, da der Zugriffsraum nur dort zeitweise bereitgestellt wird, wo ein Zugriff erfolgt und nach dem Zugriff wieder aufgehoben wird.

Die Veränderung des Abstandes zwischen den Lagerböden kann auf äußerst vielfältige Weise erfolgen. Beispielsweise können die über einem ausgewählten Lagerboden befindlichen Lagerböden angehoben werden oder der ausgewählte Lagerboden kann zusammen mit darunter befindlichen Lagerböden abgesenkt werden, während die darüber befindlichen Lagerböden fest gehalten werden. Es ist auch eine Kombination beider Bewegungen, Absenken einer Gruppe einerseits und Anheben einer anderen Gruppe andererseits möglich. Gemäß der Erfindung kann die Ausbildung eines einzelnen vergrößerten Abstandes zum Zugriff auf einen Lagerboden zwischen zwei Lagerböden erfolgen oder es können auch mehrere Abstände zwischen jeweils benachbarten Lagerböden gebildet werden. Das erfinderische Konzept ist diesbezüglich variabel.

Die Lagerböden können derart vertikal angeordnet sein, dass ein Lagerboden auf dem darunter befindlichen Lagerboden aufliegt. Dazu können an dem Lagerboden beispielweise fussartige Abstandshalter oder Rahmen ausgebildet sein. Das Anheben eines der Lagerböden bewirkt dann ein Anheben aller darauf aufliegenden bzw. ruhenden Lagerböden unter Beibehaltung von deren Abständen untereinander. Es wird gleichsam in den Stapel von Lagerböden eingegriffen und eine obere Gruppe von Lagerböden abgehoben, während die untere Gruppe ortsfest bleibt.

Die Vergrößerung des Abstandes zwischen den Lagerböden des aufeinander aufliegenden Lagerbodenstapels kann durch geeignete Hebewerkzeuge, beispielsweise in der Art einer einen Lagerboden untergreifender Gabel eines Gabelstaplers erfolgen, um den Zugriff auf den darunter befindlichen Lagerboden zu ermöglichen. In einer anderen Ausführungsform der Erfindung weisen die Lagerböden jeweils zugeordnete Antriebe auf, die beispielsweise in seitlich des Lagerbodens angeordnete Gewindestangen angreifen und durch Ansteuerung ein Anheben der Lagerböden mit Hilfe der ihnen zugeordneten Antriebe ermöglichen. Auf diese Weise können auch mehrere Beabstandungen von jeweils zwei Lagerböden in der gleichen vertikalen Lagerbödenanordnung gebildet werden.

In einer alternativen Ausführungsform der Erfindung sind die Lagerböden mit Verbindungsmitteln miteinander lösbar gekoppelt und aneinander aufgehängt. Die Lagerböden hängen durch die Wirkung der Verbindungsmittel zusammen. Ein derartiger Stapel kann an dem obersten Lagerboden an einem Träger oder einem Aufbau befestigt oder aufgehängt werden, so dass die darunter befindlichen Lagerböden, jeweils durch die Verbindungsmittel an den darüber befindlichen Lagerboden gekoppelt, einen hängenden Lagerbodenstapel bilden.

Der unterste Lagerboden kann von einer in der vertikalen Länge verstellbaren Stütze getragen sein. Auf diese Weise wird ein Zugriff auf einen beliebigen Lagerboden ermöglicht, indem die Stütze in Anlage zu dem untersten Lagerboden gebracht wird, die Verbindungsmittel zwischen dem ausgewählten Lagerboden, auf welchen ein Zugriff erfolgen soll, und dem darüber befindlichen Lagerboden gelöst werden, und die Stütze abgesenkt wird. Auf diese Weise bleiben die oberhalb des ausgewählten Lagerbodens befindlichen Lagerböden hängend in ihrer Stellung (sie sind miteinander durch die Verbindungsmittel weiterhin verbunden), der auf der Stütze befindliche Stapel mit dem ausgewählten Lagerboden als oberste Ebene wird jedoch abgesenkt, diese Lagerböden liegen ruhend aufeinander auf. Anschließend kann bequem auf den obersten Lagerboden des abgesenkten Stapels zugegriffen werden. Nach dem Zugriff kann die Stütze wieder vertikal so verstellt werden, dass die Verbindungsmittel zwischen dem ausgewählten Lagerboden und dem untersten Lagerboden des noch hängenden Stapels wieder in die Verbindungsstellung zurückkehren und der gesamte Stapel der Lagerböden verbunden aufgehängt ist.

Die Verbindungsmittel können einzeln ansteuerbare Verbindungen sein, bei denen beispielsweise ein Bolzen in eine zugehörige Aufnahme einer Haltestruktur in Eingriff gebracht oder durch Ansteuerung außer Eingriff gebracht werden kann.

In einer Ausführungsform der Erfindung sind die Lagerböden kastenartig ausgebildet, beispielsweise mit vier, drei oder zwei Seitenwänden. Die Lagerböden bilden dann die Böden oder die Deckel dieser Kästen. Durch einfaches Stapeln können die Lagerböden vertikal angeordnet werden.

Es ist ersichtlich, dass die Einrichtung eine optimierte Lagerung auf den Lagerböden bei äußerst geringem Raumbedarf ermöglicht. Es ist lediglich dafür zu sorgen, dass in vertikaler Richtung genügend Platz vorhanden ist, um mit Hilfe eines Bediengerätes auf die Stückgüter eines Lagerbodens zuzugreifen. Da dieser Zugriffsraum jedoch gleichsam durch den Stapel wandern kann, weil der Abstand nur vorübergehend zwischen Lagerböden vergrößert wird, zwischen denen auch ein Zugriff erfolgen soll, ist der vertikale Raumbedarf minimal.

Die Lagerung auf den Lagerböden der Lagerböden selbst erfolgt, indem ein Stückgut, wie z. B. eine Medikamentenpackung, mit Hilfe eines Bediengerätes in den hergestellten Abstand zwischen zwei Lagerböden eingebracht wird und von oben auf einen freien Platz auf der Lagerfläche abgelegt wird. Dieser Zugriff kann zum Beispiel mit Hilfe eines Sauggreifers erfolgen, der mit Unterdruck eine Packung ansaugt und aufnimmt und durch Druckausgleich ablegen kann. Der Sauggreifer kann dabei so ausgebildet sein, dass die Packung in einer horizontalen Ebene (parallel zu der Lagerfläche) drehbar ist. Auf diese Weise kann die Lagerfläche unter bestmöglicher Flächenausnutzung belegt werden.

Eine Einrichtung zum Anheben der Lagerböden kann auch mit dem Bediengerät gekoppelt sein, welches die Entnahme oder Bestückung eines Lagerbodens vornimmt.

Bei einer Ausführungsform der Erfindung sind seitlich der Lagerböden Antriebsmittel (z.B. ein Kettentrieb) vorgesehen, in welche Kopplungsmittel des Lagerbodens (z. B. Haken oder Klemmen) eingreifen können. Sofern die Lagerböden übereinander gestapelt sind, kann mit einem solchen einzigen Antrieb die Beabstandung der Lagerböden in jeder gewünschten Weise erfolgen, da zunächst einer der Lagerböden in Eingriff mit den Antriebsmitteln gebracht und die Antriebsmittel anschließend zur Bewegung des gekoppelten Lagerbodens nach oben angesteuert werden. Die darunter befindlichen Lagerböden bleiben gestapelt stehen, während die oberen Lagerböden durch den untersten Lagerboden, auf dem sie alle stehen, mit angehoben werden, da dieser mit den Antriebsmitteln gekoppelt ist. Bei dieser Ausgestaltung ist es sogar möglich, mehrere Abstände in dem Stapel zum Zugriff zu bilden, sofern das vertikale Raumangebot dafür ausreicht. Beispielsweise können zunächst die oberen drei Lagerböden angehoben werden und dann ein weiterer der unteren Lagerböden mit den Antriebsmitteln gekoppelt werden, um diese anzuheben und einen weiteren Abstand zu bilden.

Die gesamte Lagervorrichtung ist mit einer Computersteuerung versehen, welche die Lagerpositionen der einzelnen Stückgüter speichert. Es ist möglich, eine Mehrzahl dieser Lagerbodenstapel in einer größeren Lagereinrichtung zu realisieren. Die Computersteuerung speichert dann, in welchem Lagerstapel ein Stückgut abgelegt wurde, auf welchem Lagerboden des Lagerstapels das Stückgut abgelegt wurde und in welcher Position auf der Lagerfläche und in welcher Ausrichtung das Stückgut abgelegt wurde. Eine derartige Software zur Lagersteuerung ist dem Fachmann grundsätzlich aus dem oben beschriebenen Stand der Technik bekannt.

In einer Abwandlung der Erfindung sind die Lagerböden als gestapelte Schubladen ausgebildet, die neben der erfindungsgemäßen Zugreifbarkeit und Bedienbarkeit auch eine Notfunktion in der Art eines herkömmlichen Schubladenschrankes bieten. Ist aus irgendeinem Grund der Zugriff mit der vorgesehenen Ansteuerung nicht möglich, kann jeder Lagerboden erreicht werden, indem die zugehörige Schublade geöffnet wird. Die Auszugrichtung der Schublade kann dabei beispielsweise der Zugriffsrichtung des Bediengeräts gegenüberliegend ausgebildet sein.

Die Lagerböden selbst können beliebig gestaltet sein. Es ist lediglich erforderlich, dass diese Lagerböden vertikal übereinander angeordnet sind. Die Lagerböden selbst können je nach Bedarf auch leicht geneigt ausgebildet werden und jede äußere Form, eckig oder rund oder unregelmäßig annehmen. Die Ebenen können auch als Drehteller ausgebildet sein.

Es ist wesentlich, dass bei einer vertikalen Anordnung von Lagerplätzen der vertikale Abstand zwischen einzelnen Lagerböden gezielt vergrößert werden kann. Auf diese Weise wird das Lager im Normalzustand bei geringst-möglicher vertikaler Ausdehnung gehalten und nur in den Bereichen ein Zugriffsraum hergestellt, in denen tatsächlich ein Zugriff erfolgen soll. Der Zugriffsraum kann gleichsam durch den vertikalen Lagerstapel wandern. Gleichzeitig ist es nicht erforderlich, vor dem Lagerstapel einen Aktionsraum zur Öffnung von Schubladen vorzusehen.

Es ist besonders vorteilhaft, dass die vertikale Bewegung des Stapels für die auf den Lagerböden befindlichen Stückgüter unproblematisch ist, da diese sich bei der Vertikalbewegung nicht verschieben. Hingegen hat eine Öffnung von Schubladen in horizontaler Richtung jederzeit mit Bedacht zu erfolgen, da sonst die im System gespeicherten Lagerplätze von der Realität durch ein Verrutschen der Stückgüter aufgrund der Trägheit der Packungen abweichen können.

Die Erfindung ist mit einer Mehrzahl derartiger Lagerstapel realisierbar. In jeder der Lagerböden kann eine Teilung in unterschiedliche Schubfächer vorgesehen sein, so dass ein modularer Aufbau der Einrichtung möglich ist.

Die Erfindung wird nun anhand eines Ausführungsbeispiels näher erläutert, welches in den beiliegenden Zeichnungen dargestellt ist.
Figur 1a zeigt eine erste erfindungsgemäße Ausführungsform einer Lagereinrichtung in einer Ansicht von vorne.
Figur 1b zeigt die Lagereinrichtung aus Figur 1a in einer Ansicht von der Seite.
Figur 1c zeigt die Lagereinrichtung der Figuren 1a und 1b in einer Ansicht von hinten.
Figur 1d zeigt die Lagereinrichtung aus den Figuren 1a, 1b und 1c in einer perspektivischen Ansicht von schräg oben.
Figur 1e zeigt die Lagereinrichtung der Figuren 1a bis 1d in einer Ansicht von oben.
Figur 1f zeigt eine Detailvergrößerung eines in Figur 1c markierten Bereichs.
Figur 2a zeigt die Lagervorrichtung gemäß dem Ausführungsbeispiel in einer Stellung mit vergrößertem Abstand zwischen zwei Lagerböden.
Figur 2b zeigt die Lagervorrichtung aus Figur 2a in einer Ansicht von der Seite.
Figur 2c zeigt die Lagervorrichtung aus den Figuren 2a und 2b in einer Ansicht von hinten.
Figur 2d zeigt die Lagereinrichtung der Figuren 2a bis 2c in einer Perspektivansicht von schräg oben.
Figur 2e zeigt die Lagereinrichtung der Figuren 2a bis 2d in einer Ansicht von oben.
Figur 2f zeigt eine Detailvergrößerung des Details aus Figur 2c.
Figur 3a zeigt die Lagervorrichtung gemäß dem Ausführungsbeispiel in einer Stellung mit einem zwischen die Lagerböden bewegten Sauggreifer.
Figur 3b zeigt die Ausführungsform aus Figur 3a in einer Ansicht von der Seite.
Figur 3c zeigt die Ausführungsform der Figuren 3a und 3b in einer Ansicht von hinten.
Figur 3d zeigt die Ausführungsform der Figuren 3a bis 3c in einer Perspektivansicht von schräg oben.
Figur 4a zeigt eine zweite Ausführungsform der Erfindung in einer Ruhestellung.
Figur 4b zeigt die Ausführungsform aus Figur 4a in einer Zugriffsstellung.
Figur 5a zeigt eine dritte Ausführungsform der Erfindung in einer Ruhestellung.
Figur 5b zeigt die Ausführungsform aus Figur 5a in einer Zwischenstellung.
Figur 5c zeigt die Ausführungsform aus Figur 5a in einer Zugriffsstellung.

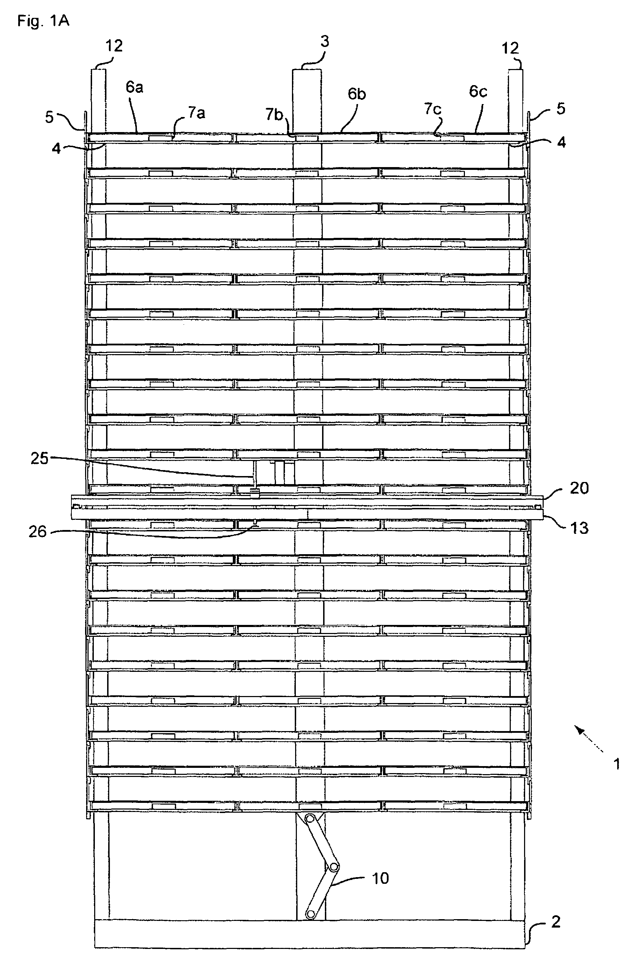

Figur 1a zeigt eine Lagereinrichtung 1 gemäß einem ersten Ausführungsbeispiel der Erfindung. An einer Fußkonstruktion 2 ist eine zentrale Führungssäule 3 befestigt. An der Führungssäule 3 sind die vertikal übereinander angeordneten Lagerböden 4 geführt und gehalten, wobei jede Lagerfläche die Führungssäule mit einem Halteabschnitt umgreift (wird in nachfolgenden Abbildungen verdeutlicht). Seitlich weisen die Lagerböden 4 Abstandselemente 5 auf, die beidseitig an den Lagerböden befestigt, jeweils zwei an einer Lagerfläche. Die zwanzig Lagerböden 4 liegen auf diese Weise mit ihren Abstands- bzw. Distanzhaltern 5 auf den Abstandshaltern der jeweils darunter befindlichen Lagerböden auf. Auf diese Weise wird eine gestapelte Lagerflächenanordnung gebildet, wobei die Lagerböden 4 zentral über die Führungssäule 3 verdrehsicher und in vertikaler Anordnung geführt sind und seitlich auf der darunter liegenden Lagerebene mit ihren Distanzhaltern aufliegen. Die Lagerböden 4 sind jeweils aus drei nebeneinander angeordneten Schubelementen 6a, 6b, 6c gebildet. Diese Schubelemente können im Notfall manuell in einer Bewegung in der Lagerebene ausgezogen werden, um den Zugriff auf die Lagerebene bei einem Ausfall der Lagereinrichtung zu ermöglichen. Dazu sind an der Vorderseite der Schubelemente Griffvorrichtungen 7a, 7b, 7c ausgebildet. Im normalen Betrieb der Lagereinrichtung bleiben die Schubladenelemente 6a, 6b und 6c jedoch in geschlossener Stellung.

Die Bestandteile jeder der zwanzig Lagerböden sind anhand der obersten Lagerebene verdeutlicht. Jede der neunzehn darunter befindlichen Lagerböden weist jedoch die gleichen Merkmale auf. Aus Gründen der Übersichtlichkeit wurden die Bezugszeichen jedoch nur an die oberste Lagerebene angebracht.

Unterhalb des untersten Lagerbodens der Stapelanordnung ist eine Absenk- und Hebeeinheit 10 ausgebildet, welche die unterste Lagerebene unterstützt, die auf keiner weiteren Lagerebene aufliegt. Mit dieser Absenk- und Hebeeinrichtung 10 kann eine Stütz- und Hebekraft auf die unterste Lagerebene ausgeübt werden, wodurch der gesamte Stapel der Lagerböden angehoben werden kann, da die jeweils vertikal benachbarten Lagerböden mit den Distanzhaltern aufeinander aufliegen.

An der Fußkonstruktion 2 sind seitlich vertikale Führungen 12 ausgebildet, an denen ein Rahmen 13 vertikal verfahrbar angeordnet ist. Der Rahmen umgreift die Lagerböden und kann an den Lagerböden 4 vorbeigleitend den Stapel herauf und hinab gefahren werden. Dazu ist dem Rahmen 13 ein Vertikalantrieb zugeordnet (nicht dargestellt).

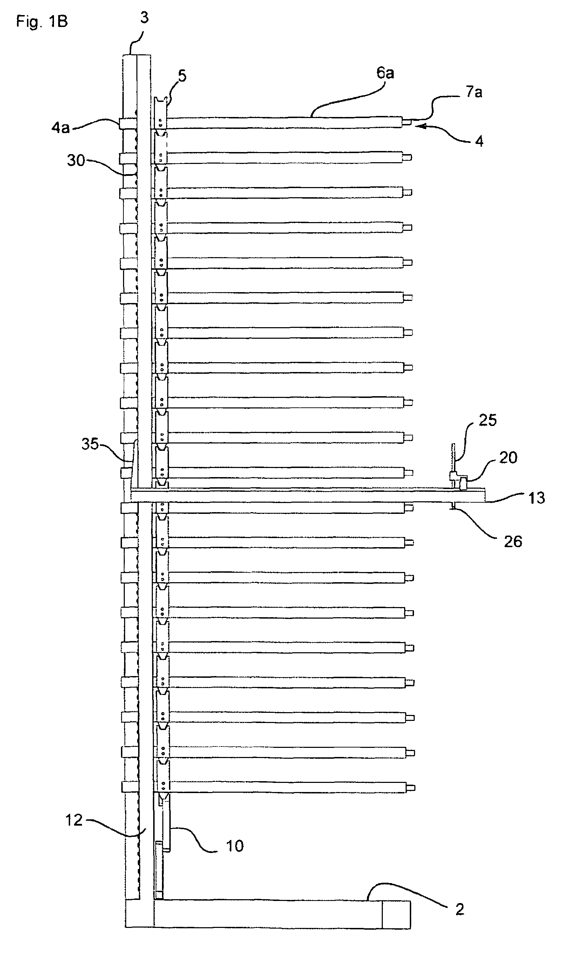

In Figur 1b ist die Vorrichtung aus Figur 1a in einer Seitenansicht gezeigt. Die Bestandteile der Lagerböden sind wiederum exemplarisch an der obersten Lagerebene gekennzeichnet, wobei jede der darunter liegenden Lagerböden entsprechende Elemente aufweist. In der Seitenansicht sind die Distanzhalter 5, der Lagerboden 4 mit dem zum Betrachter weisenden Schubelement 6a sowie der Griff 7a für das Schubelement gezeigt. Die Distanzhalter 5 weisen an ihrem oberen Ende eine Aufnahmemulde und an ihrem unteren Ende einen Eingriffsansatz auf. Es ist deutlich, dass jede der Lagerböden 4 die Führungssäule 3 mit einem Halteansatz 4a umgreift. Der an den Seitenführungen 12 vertikal verfahrbare Rahmen 13 weist eine auf dem Rahmen wiederum verfahrbare Querführung 20 auf, an der wiederum verfahrbar ein Sauggreifer 25 geführt ist. Die verfahrbare Strebe 20 kann auf diese Weise in den Lagerstapel hineingefahren werden (in Figur 1b in Rechts-Links-Richtung) während der Sauggreifer 25 über den Lagerboden hin und her bewegbar ist (in Figur 1b in die Blattebene hinein und aus der Blattebene hinaus).

Am unteren Ende des Sauggreifers 25 ist eine Saugeinrichtung 26 angeordnet, die mit Unterdruck beaufschlagt werden kann, um eine darunter befindliche Packung zu greifen. Die Sauggreifereinrichtung 25 ist ferner teilweise auf und ab bewegbar, um ein Stückgut anzuheben oder abzusenken und außerdem ist der Saugteller 26 drehbar, so dass ein aufgenommenes Stückgut in einer Ebene parallel zu den Lagerböden gedreht und ausgerichtet werden kann.

Die Führungssäule 3 weist eine Vielzahl von Bohrungen 30 auf (von denen eine exemplarisch mit Bezugszeichen versehen ist), in die eine mit dem Rahmen 13 gekoppelte Sperrvorrichtung 35 eingreifen kann.

Befindet sich die Sperrvorrichtung 35 nicht in Eingriff mit der Säule 3 kann der gesamte Stapel mit Hilfe der Hebevorrichtung 10 vertikal verfahren werden, wobei die Halteabschnitte 4a über die Führungssäule 3 gleiten.

Greift die Sperrvorrichtung 35 in eine der Bohrungen 30 ein, können die darüber befindlichen Lagerböden nicht abgesenkt werden, da diese über die Distanzhalter 5 mit der untersten Lagerebene oberhalb des Sperrbolzens verbunden sind und der Sperrbolzen eine Abwärtsbewegung der untersten Lagerebene verhindert, da der Halteansatz 4a auf nicht über den Eingriffspunkt in der Führungssäule gleichen kann. Auf diese Weise kann durch eine entsprechende Positionierung des Rahmens 13 und dem Eingreifen der Sperrmittel 35 erreicht werden, dass bei einem Betätigen der Absenkeinheit 10 nur eine Gruppe der unter der Sperreinrichtung 35 befindlichen Lagerböden abgesenkt wird, während die darüber befindlichen Lagerböden durch die Sperreinrichtung 35 in ihrer Position gehalten werden.

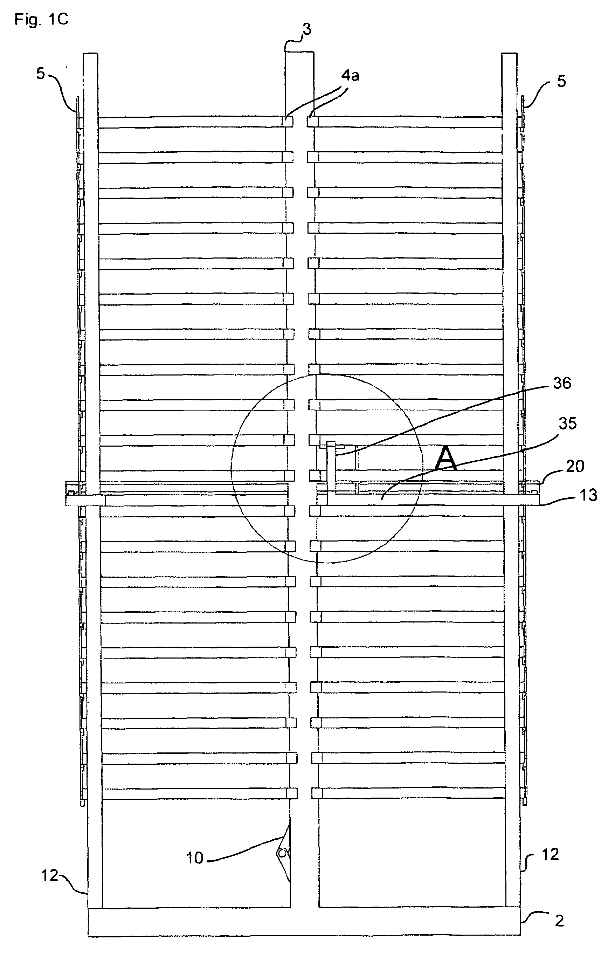

Figur 1c zeigt die in den Figuren 1a und 1b gezeigte Vorrichtung in einer Ansicht von hinten. In dieser Ansicht ist erkennbar, dass die Sperrmittel 35 mit dem Rahmen 13 gekoppelt sind und sich bis zu der Führungssäule 3 erstrecken. Die Sperrmitteln 35 weisen zum Eingriff in die Führungssäule 3 einen betätigbaren Sperrbolzen 36 auf, der sich in der dargestellten Stellung außerhalb des Eingriffs mit der Führungssäule 3 befindet. In dieser Stellung sind alle Lagerböden über die Distanzhalter 5 gekoppelt und die Absenk- und Hebeeinrichtung 10 kann die Bewegung aller Lagerböden veranlassen.

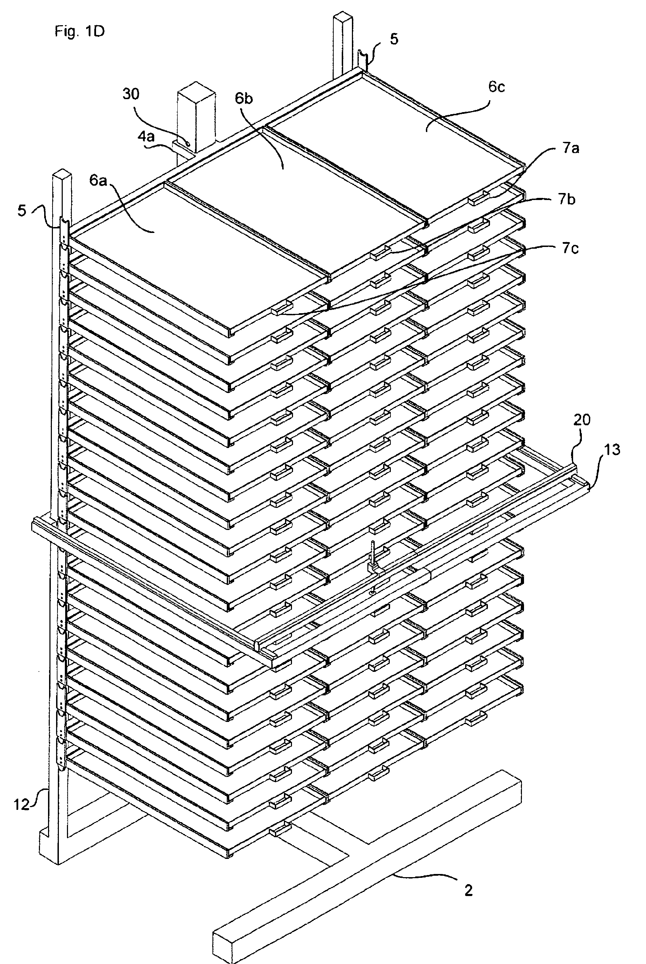

Figur 1d zeigt die Lagervorrichtung der Abbildungen 1a, 1b und 1c in einer perspektivischen Ansicht. Aus dieser Darstellung wird die Gestaltung der Fußkonstruktion mit den seitlichen Führungssäulen 12 für den Rahmen 13 und der zentralen Führungssäule 3 für die Lagerböden 4 besonders deutlich. Insbesondere ist am oberen Ende der Führungssäule 3 eine der Verriegelungsöffnungen 30 erkennbar, in welche die Sperreinrichtung 35, 36 eingreift.

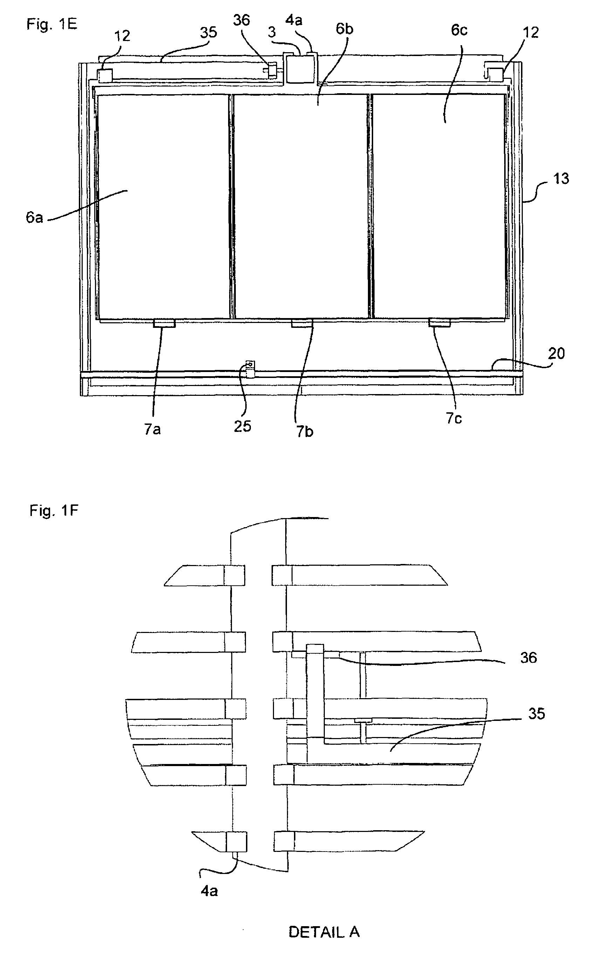

Die Figur 1e zeigt die Lagervorrichtung in einer Ansicht von oben. Die Führung des Rahmens 13 an den seitlichen Führungssäulen 12 ist erkennbar und die Halterung der Lagerböden 4 an der zentralen Führungssäule 3 mit den über die Säule 3 gleitenden Halteabschnitten 4a wird deutlich. Außerdem ist die Verriegelungsvorrichtung 35 mit der Sperrbolzenanordnung 36 gut erkennbar.

Weiter ist in der Zeichnung 1e die entlang des Rahmens 13 verfahrbare Führungsschiene 20 gezeigt, an der der Sauggreifer 25 seinerseits verfahrbar angeordnet ist. Ähnlich der Bewegung eines Zeichenplotters kann der Sauggreifer 25 durch ein Verfahren der Führungsschiene 20 entlang des Rahmens 13 und ein Verfahren des Sauggreifers entlang der Führungsschiene 20 über jede der Lagerböden verfahren werden.

Figur 1f zeigt ein vergrößertes Detail der Sperreinrichtung 35 mit dem Sperrbolzen 36, sowie der zentralen Führungssäule 3. Der Bolzen 36 befindet sich außerhalb des Eingriffs mit der Säule 3, so dass die Lagerböden 4 durch die Distanzstücke gehalten aufeinander liegen. Der Bolzen 36 ist ansteuerbar, so dass er sich bei entsprechender Positionierung vor einer Öffnung in der zentralen Führungssäule 3 zur Verriegelung der vertikalen Bewegung einer der Lagerböden in eine Öffnung der Führungssäule bewegen kann.

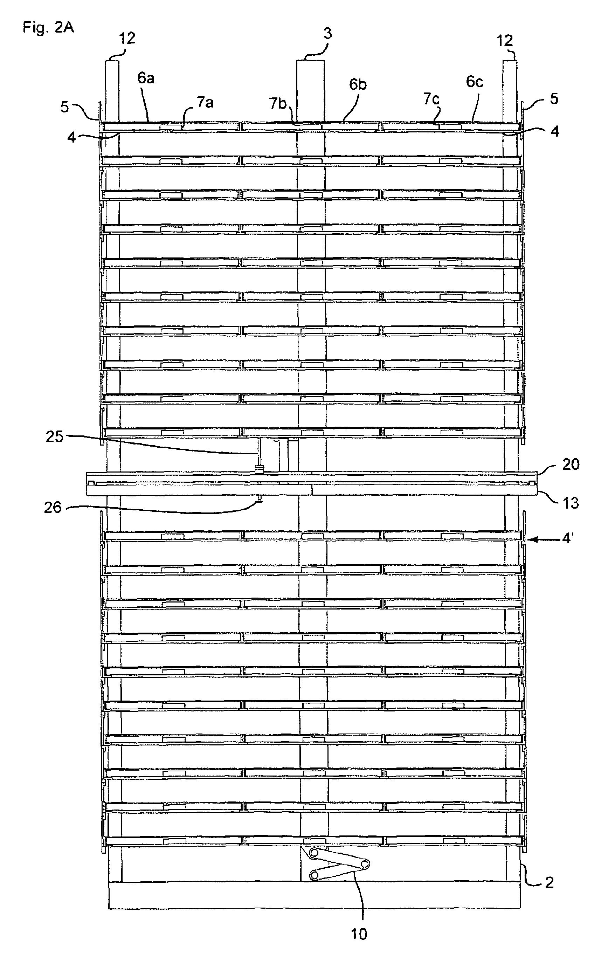

Figur 2a zeigt die Lagervorrichtung, diesmal jedoch mit einer abgesenkten unteren Gruppe von Lagerböden. Die mit dem Rahmen 13 gekoppelte Verriegelungsvorrichtung 35, 36 ist in Eingriff mit einer der Öffnungen 30 in der mittleren Führungssäule 3 gebracht worden, so dass ein Absenken der oberen zehn Lagerböden verhindert wird. Der Absenk-Antrieb 10 wurde zur vertikalen Verstellung angesteuert und hat die unteren zehn Böden, welche nicht durch die Sperreinrichtung blockiert werden, abgesenkt. Die Böden folgen der Absenkbewegung aufgrund der wirkenden Schwerkraft. Durch diesen Absenkvorgang hat sich zwischen den oberen zehn Lagerböden und den unteren zehn Lagerböden ein vergrößerter Zwischenraum ergeben, in dem die Distanzhalter der Lagerböden nicht länger aufeinander aufliegen. Der Rahmen 13 und mit ihm die Querführung 20 mit dem Sauggreifer 25, 26 befinden sich in diesem vergrößerten Abstand. Der Sauggreifer 25, 26 hat in diesem Zustand ausreichend vertikalen freien Raum, um über die oberste der abgesenkten Lagerflächen, den Lagerboden 4' gefahren zu werden.

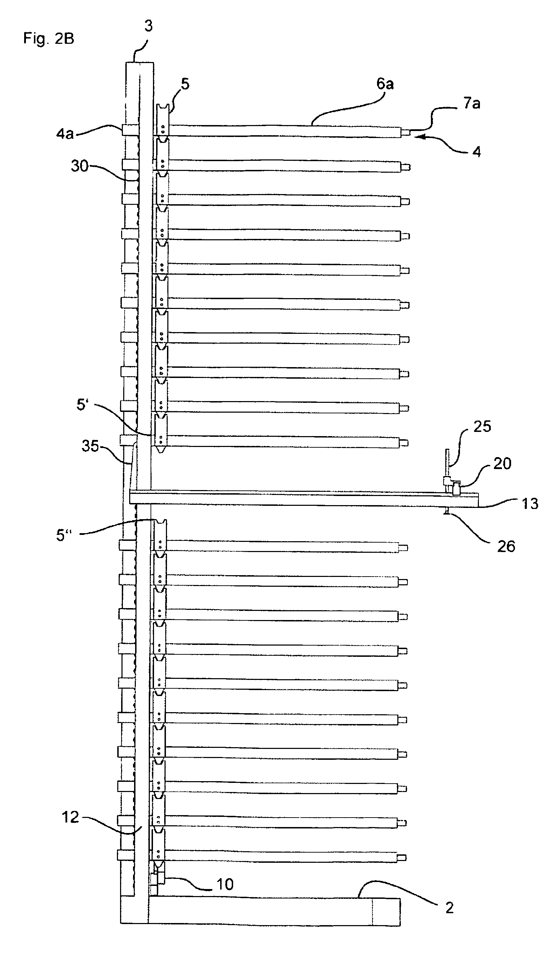

Figur 2b zeigt die Stellung der Lagervorrichtung aus Figur 2a in einer Seitenansicht in welcher deutlich wird, dass die Abstandshalter der beim Absenken getrennten Ebenen, nämlich die Abstandshalter 5' und 5" nicht länger in Kontakt miteinander stehen, sondern dass die unterste der oberen zehn Lagerböden durch die Sperr- oder Verriegelungsmittel 35, 36 am Heruntergleiten entlang der Führungssäule 3 gehindert wird, während die unteren zehn Lagerböden, jeweils gestützt durch die unmittelbar darunter befindliche Lagerebene und die Absenkeinrichtung 10 vertikal entlang der Führungssäule 3 verschoben wurden.

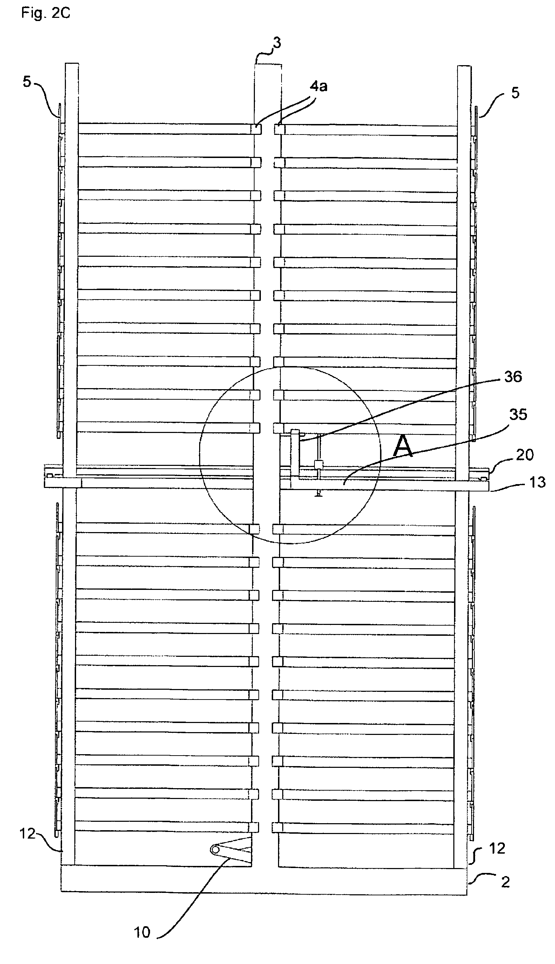

In Figur 2c ist die Vorrichtung in einer Ansicht von hinten gezeigt, wobei erkennbar wird, dass die Sperreinrichtung 35 mit ihren Sperrmitteln 36 in die zentrale Führungssäule 3 eingreift, um das Absenken der oberen zehn Lagerböden zu verhindern.

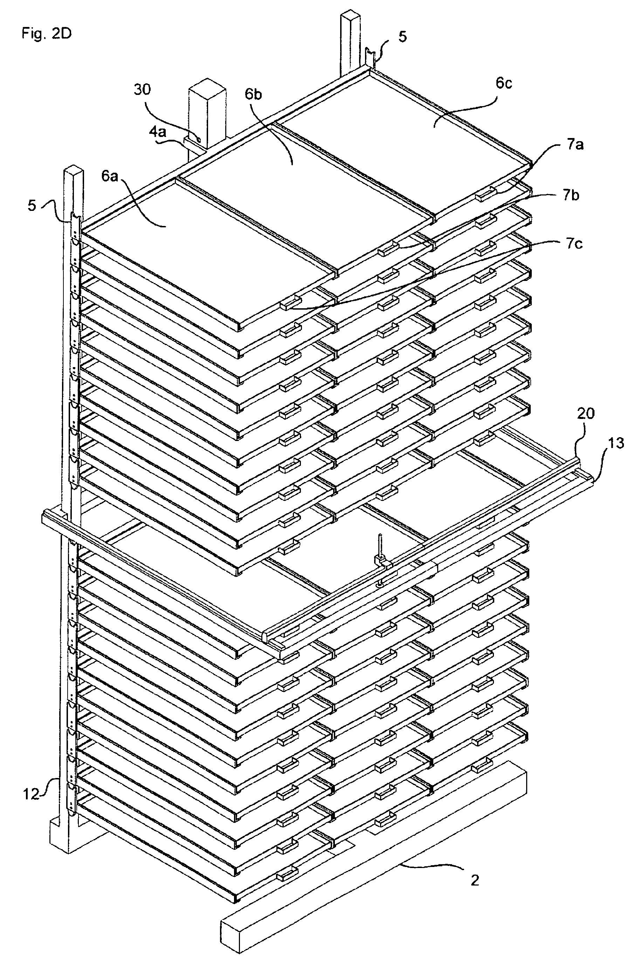

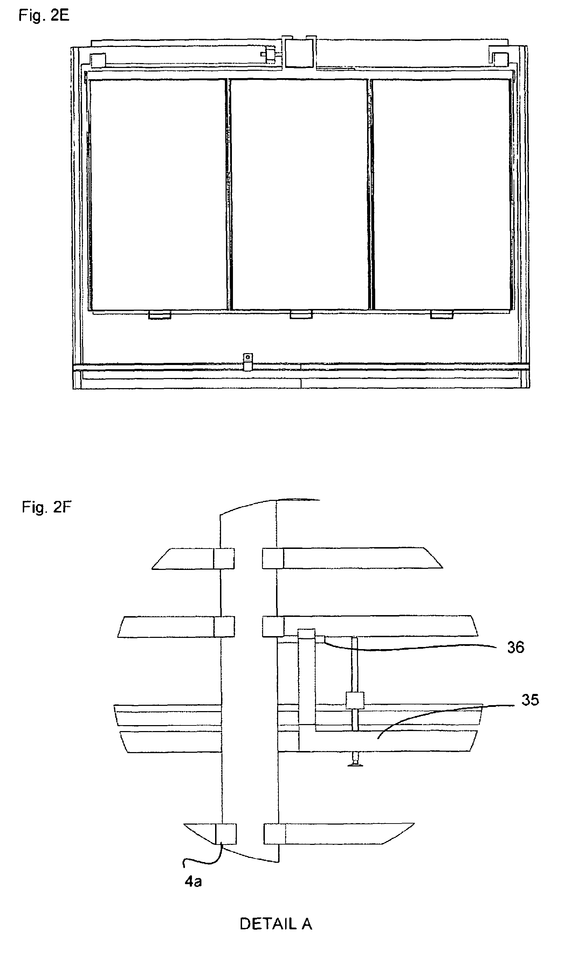

Die Figuren 2d und 2e zeigen weitere Ansichten der Vorrichtung mit abgesenkter unterer Lagerbodengruppe.

Die Figur 2f zeigt das in der Figur 2c markierte Detail A in vergrößerter Darstellung. Der Sperrbolzen 36 zur Verriegelung der Abwärtsbewegungen der oberen zehn Lagerböden ist in Eingriff mit der zentralen Führungssäule 3 gebracht.

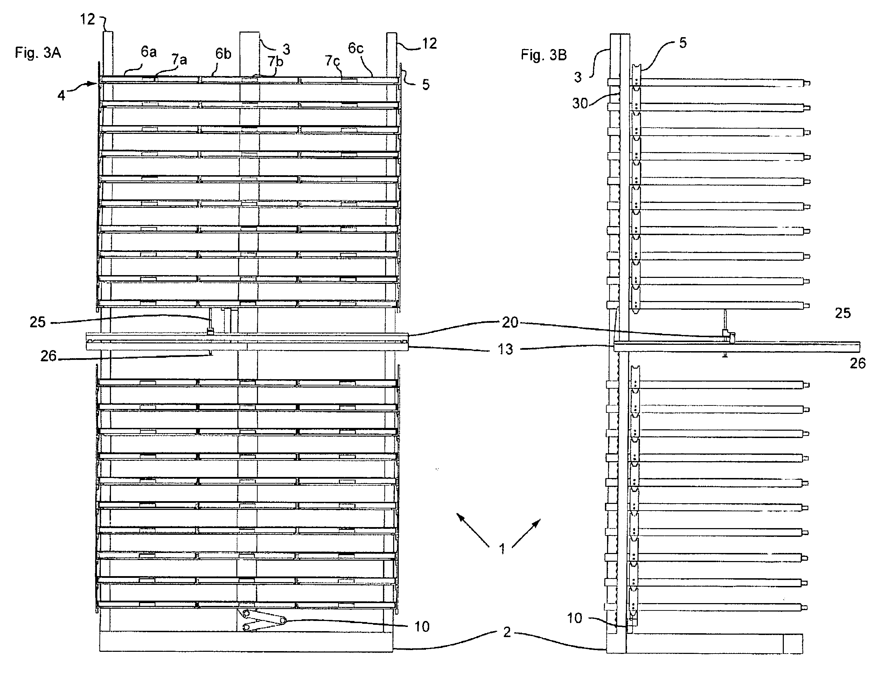

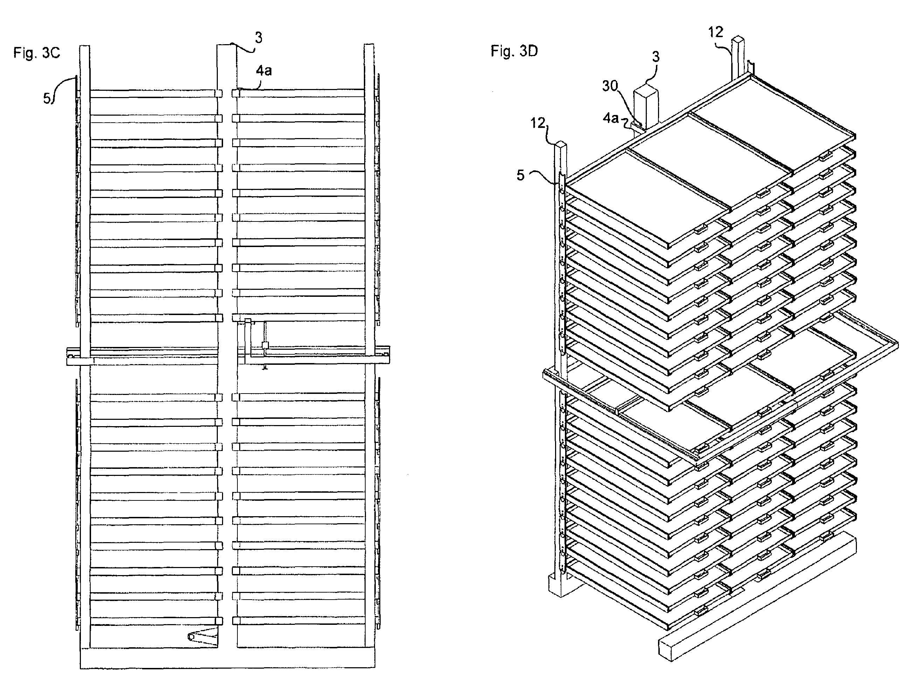

In den Figuren 3a, 3b, 3c und 3d ist die Vorrichtung in einer weiteren Betriebsstellung in verschiedenen Ansichten gezeigt, wobei die oberen zehn Lagerböden und die unteren zehn Lagerböden weiterhin gegeneinander beabstandet sind. In dieser Stellung ist jedoch der Sauggreifer 25 entlang der Seitenführungen des Rahmens 13 verfahren worden und befindet sich nun zwischen den Lagerböden, so dass er mit seinem Saugansatz 26auf die oberste der abgesenkten Lagerböden, die Lagerebene 4' zugreifen kann.

Die in den Zeichnungen dargestellte Funktionsweise und der Aufbau der Lagervorrichtung machen deutlich, dass dieses Lagerkonzept ein äußerst raumsparendes Lagern von Stückgütern erlaubt und wartungsfreundlich aufgebaut ist. Das Absenken der Lagerböden erfolgt über einen einzigen Antrieb, nämlich die unter den Lagerböden angeordnete Absenkeinheit bzw. Hubeinheit 10. Die Auswahl, welcher der Lagerböden zugreifbar gemacht werden soll, erfolgt über das Ansteuern des entsprechenden Lagerbodens durch vertikales Verstellen des Rahmens 13 und ein Eingreifen der Sperrmittel 36 in die zentrale Führungssäule 3. Die Ausbildung der Lagerböden mit Abstandshaltern ist außerdem besonders vorteilhaft, da die Abstandhalter veränderbar oder austauschbar gestaltet sein können. So können Lagerböden mit unterschiedlicher Lagerhöhe gebildet werden. In der Ansteuerlogik bzw. der Ansteuersoftware kann gespeichert werden, welche Lagerhöhe einer Lagerebene bzw. einem Lagerboden zugeordnet ist, so dass auch die Absenkung, je nach zugegriffener Lagerebene, unterschiedlich erfolgen kann. Mit dem Rahmen 13 bzw. der gesamten Greiferanordnung kann eine Ablagestation oder Abwerfstation verbunden sein, welche die aus dem Lager entnommenen Stückgüter an eine Kommissioniereinrichtung oder eine Abgabestation weiter transportiert. Dazu kommt beispielsweise auch ein höhenveränderliches Laufband in Frage. Die Einlagerung erfolgt in analoger Weise, wobei der Sauggreifer ein Stückgut aufnimmt, beispielsweise von einem vor der Einrichtung verlaufenden Transportband, und dieses Stückgut auf eine zuvor durch die Steuersoftware ermittelte Position eines Lagerbodens ablegt. Da der gesamte Bereich jedes Lagerbodens von oben zugreifbar ist, kann die Lagerung durch geeignete Drehung der Packung zur Einlagerung sowohl vor dem Aufnehmen durch den Sauggreifer (z.B. auf einem Drehtisch oder mit einem weiteren Greifer) als auch durch eine Rotation des Sauggreifers parallel zu einer Lagerebene optimiert werden. In der gesamten Einrichtung ist damit eine hochdichte Lagerung von Stückgütern möglich.

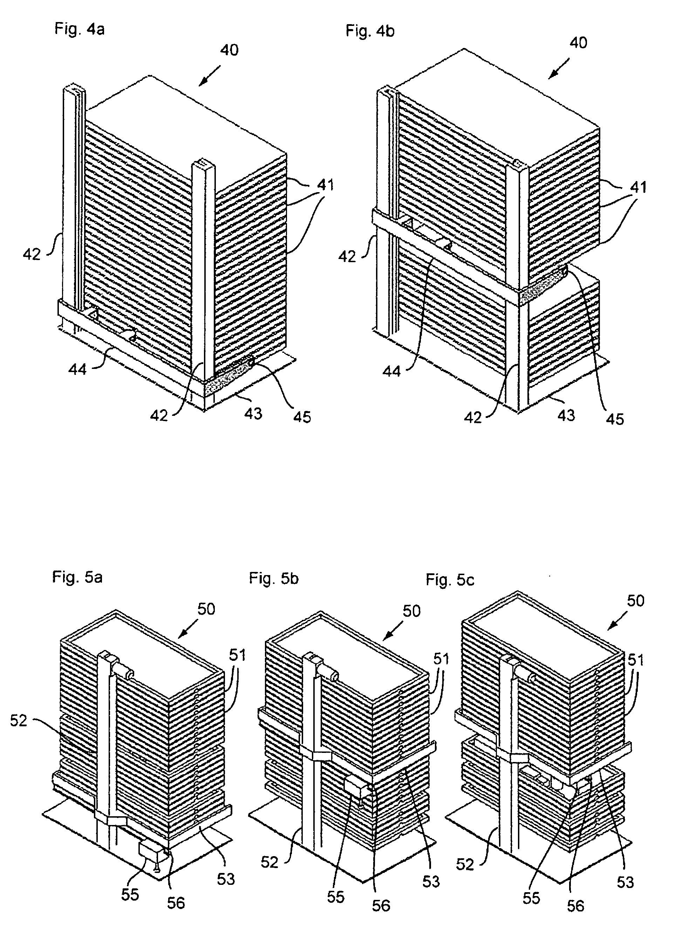

In Figur 4a ist eine weitere Ausführungsform der Erfindung gezeigt. Bei dieser Ausführungsform ist ein Stapel 40 aus Ablageflächen in Form von aufeinander aufliegenden Tabletts 41 gebildet. An einer Längsseite des Stapels 40 sind zwei Führungspfosten 42 auf einer Bodenplatte 43 befestigt. Vertikal verfahrbar ist ein Hubarm 44 an den Führungspfosten 42 gehalten. Der Hubarm umgreift den Stapel 40 entlang etwa der Hälfte des Umfangs. An den Enden der Tragarme des Hubarms sind Arretiermittel 45 vorgesehen.

Für die Bestückung eines der Tabletts 41 oder für die Entnahme wird der Hubarm 44 in eine Höhe verfahren, so dass die Arretiermittel 45 das auf dem gewählten Tablett aufliegende Tablett untergreifen können. In dieser Stellung werden die Arretiermittel betätigt, wobei beidseitig jeweils ein Tragbolzen unter das aufliegende Tablett bewegt wird. Der Hubraum wird anschließen weiter nach oben verfahren, um einen Arbeitsraum oberhalb des Lagerbodens zu bilden, in die ein Bediengerät (nicht gezeigt) einfahren kann, um von oben auf die Stückgüter zugreifen zu können. Dabei werden sämtliche aufliegenden Tabletts mit angehoben. Diese Stellung ist in Figur 4b gezeigt.

Es ist anhand der Zeichnung offensichtlich, dass die Höhe des Aufbaus durch die Führungspfosten vorgegeben ist. Das gesamte Lager ist äußerst kompakt, da jeweils nur ein einziger Arbeitsraum bei Bedarf zwischen den Lagerböden hergestellt wird, welcher über jedem Regalboden bzw. jedem Tablett zur Verfügung stehen kann.

Die korrekte Höhensteuerung kann über eine präzise Ansteuerung des Antriebs für den Hubarm erfolgen, wobei ein Steuersystem die entsprechenden Höheninformationen bereitstellt. Alternativ können die Ablageflächen optisch, mechanisch oder elektronisch auslesbare Markierungen aufweisen. Diese können mit Sensormittel, welche an dem Hubarm befestigt sind, beim Abfahren des Stapels 40 ausgelesen werden, um die korrekte Lageposition des Hubarms zu bestimmen.

Figur 5a zeigt eine weitere Ausführungsform, bei welcher ein Stapel 50 aus einer Vielzahl von Lagertabletts 51 gebildet ist. An einer Seite ist ein einzelner Führungspfosten 52 ausgebildet. An diesem Führungspfosten ist ein Hubarm 53 vertikal verfahrbar angekoppelt. Der Hubarm umgreift den Stapel 50 entlang von drei Seiten der Lagertabletts.

An dem Hubarm 53 ist eine Führung ausgebildet, entlang derer ein Bediengerät 54 mitsamt einer Traverse 56 verfahrbar ist. Das Bediengerät ist in Figur 5a in eine Stellung außerhalb des Stapels gefahren, so dass die Lagertabletts aufeinander aufliegen können. In Figur 5b ist gezeigt, wie der Hubarm 53 mitsamt dem Bediengerät 55 an der Traverse 56 in eine Stellung auf etwa halber Höhe des Lagerstapels verfahren ist. Diese Stellung wurde mit Hilfe eines Antriebs und unter Kontrolle eines Steuersystems (nicht gezeigt) angefahren. An dem Hubarm sind Arretiermittel vorgesehen, die in den Stapel 50 einfahren, um eines der Lagertabletts zu untergreifen. Anschließend wird der aufliegende Teilstapel angehoben, um über dem ausgewählten Lagerboden einen Arbeitsraum zu schaffen. Diese Stellung ist in Figur 5c gezeigt.

Es ist dargestellt, dass das Bediengerät 55 mit der Traverse 56 in den Lagerstapel hinein verfahren wurde, so dass es sich zwischen den Lagerböden befindet. Es hängt unterhalb der Ebene des Hubarms und kann entlang der Traverse 56 und des Hubarm 53 in jede Stellung oberhalb des gewählten Lagertabletts verfahren werden. Mit Hilfe eines Sauggreifers kann das Bediengerät ein Stückgut aufnehmen und in einen Abgabebereich außerhalb des Stapels transportieren. Sobald das Bediengerät 55 sich wieder außerhalb des Stapels befindet, kann das Lager wieder verdichtet werden, indem der Hubarm wieder abgesenkt wird.

Diese Ausführungsform ist besonders vorteilhaft, da der Hubarm zu Bereitstellung des Arbeitsraumes gleichzeitig Träger und Führung für das Bediengerät ist. Das Bediengerät befindet sich automatisch in optimaler Stellung zu der Lagerfläche, sobald der Hubarm einen Teilstapel angehoben hat. Es ist daher keine Abstimmung der Stellungen des Bediengerätes zum Stapel erforderlich.

Im Rahmen der Erfindung sind zahlreiche Abwandlungen möglich. Beispielsweise kann die Lagereinrichtung durchaus auch von verschiedenen Seiten bestückt werden. Ferner braucht nicht die vertikale Verriegelung mit der Halterung für den Sauggreifer gekoppelt zu sein. Vielmehr kann auch ein separater Sauggreifer mit entsprechender Steuerung vorgesehen sein, der vor den Lagerböden verfahrbar ist. Jeder der Lagerböden kann eine betätigbare Verriegelung zugeordnet sein. In diesem Fall wird eine Funktion des Lagerstapels ermöglicht, bei welcher der Sauggreifer den ausgewählten Lagerboden anfährt und gleichzeitig bereits die darüber liegende Lagerfläche verriegelt wird und die unteren Lagerböden, mit dem ausgewählten Lagerboden zuoberst, abgesenkt werden. Die Geschwindigkeit des Zugriffs wird dann weiter erhöht.

Zur Unterstützung des Hebemechanismus und Absenkmechanismus kann eine pneumatische oder hydraulische Einrichtung vorgehen sein. Der Antrieb kann dann besonders günstig und mit geringer Kraftanforderung gebaut werden.

Die Arretierung der einzelnen Lagerböden für die Vergrößerung des Abstandes zwischen zwei Lagerböden braucht nicht mit separaten Feststell- oder Sperrmitteln vorgenommen werden, die jedem einzelnen Lagerboden zugeordnet sind. Es können auch Arretier- oder Feststelleinrichtungen am Aufbau, z.B. der Rahmenstruktur vorgesehen werden, die eine je nach Bedarf eine der Lagerböden oder Gruppen von Lagerböden feststellen. Dazu können z.B. auch Klemmmittel zum Einsatz kommen.

Zwar ist die Erfindung besonders vorteilhaft im Bereich der raumoptimierten Lagerung unterschiedlicher Verpackungen, es ist jedoch auch möglich, gleichartige Packungen auf kompletten Lagerböden oder Lagerflächenbereichen zu lagern. Beispielsweise kann jede der in einer Lagerfläche nebeneinander angeordneten Schubladenteller 6a, 6b, 6c mit einer einheitlichen Stückgutsorte bestückt sein. Um den Zugriff auf mehrere dieser Stückgüter gleichzeitig zu ermöglichen, kann in der oben beschriebenen Weise eine Mehrzahl von Packungen gleichzeitig ausgelagert werden, beispielsweise indem eine Packung mitsamt den davor befindlichen Packungen in einer Richtung aus dem Stapel herausgeschoben wird.

## Patentansprüche

1. Lagereinrichtung für Stückgüter, mit einer Mehrzahl übereinander angeordneter Lagerböden (4) mit ebenen Lagerflächen, wobei auf jeder Lagerfläche eine Mehrzahl von Stückgütern nebeneinander lagern können, wobei
die Lagerböden (4) derart von einem Antrieb vertikal bewegbar sind, dass der vertikale Abstand zwischen zwei beliebigen in vertikaler Richtung benachbarten Lagerböden vergrößerbar ist, um einen Zugriffsraum über der mit Stückgütern teilweise oder vollständig belegten Lagerfläche des unteren der benachbarten Lagerböden zu schaffen, **dadurch gekennzeichnet,**
**dass** wenigstens ein Bediengerät (20, 25, 26) vorgesehen ist, welches zunächst außerhalb der Lagerböden neben dem Zugriffsraum positionierbar und dann in horizontaler Richtung in den Zugriffsraum zwischen die Lagerböden einfahrbar ist,
wobei das Bediengerät (20, 25, 26) für einen Zugriff von oben auf die auf der Lagerfläche des unteren der benachbarten Lagerböden liegenden oder zu lagernden Stückgüter ausgebildet ist.

2. Lagereinrichtung nach Anspruch 1, **dadurch gekennzeichnet, dass** das Bediengerät in vertikaler Richtung neben einem von den vertikal übereinander angeordneten Lagerböden gebildeten Stapel verfahrbar ist, um es horizontal neben dem Zugriffsraum zu positionieren.

3. Lagereinrichtung nach Anspruch 1 oder 2, **dadurch gekennzeichnet, dass** jeder Lagerboden mit einem vertikal benachbarten Lagerboden mit Hilfe von Verbindungsmitteln lösbar gekoppelt sind.

4. Lagereinrichtung nach Anspruch 3, **dadurch gekennzeichnet, dass** die Verbindungsmittel jedes der Lagerböden zum Lösen der Kopplung einzeln ansteuerbar sind, so dass gezielt die Trennung von zwei ausgewählten Lagerböden möglich ist.

5. Lagereinrichtung nach Anspruch 3 oder 4, **dadurch gekennzeichnet, dass** der oberste Lagerboden ortsfest fixiert ist.

6. Lagereinrichtung nach Anspruch 5, **dadurch gekennzeichnet, dass** der unterste Lagerboden durch eine vertikal verstellbare Unterstützung haltbar ist.

7. Lagereinrichtung nach einem der Ansprüche 1 - 6, **dadurch gekennzeichnet, dass** die Lagerböden in einer Führungseinrichtung vertikal verschiebbar sind.

8. Lagereinrichtung nach Anspruch 7, **dadurch gekennzeichnet, dass** die Verschiebbarkeit jedes der Lagerböden gegenüber der Führungseinrichtung mit Sperrmitteln blockierbar ist.

9. Lagereinrichtung nach Anspruch 8, **dadurch gekennzeichnet, dass** die Sperrmittel von dem Bediengerät betätigbar sind.

10. Lagereinrichtung nach einem der Ansprüche 1 - 9, **dadurch gekennzeichnet, dass** die Lagerböden derart gestapelt angeordnet sind, dass alle Lagerböden mit Ausnahme des untersten Lagerbodens auf einem vertikal benachbarten Lagerboden aufliegen.

11. Lagereinrichtung nach Anspruch 10, **dadurch gekennzeichnet, dass** ein vertikal verfahrbarer Hubarm vorgesehen ist, welcher mit Mitteln zum Ergreifen eines Lagerbodens versehen ist, so dass der Lagerboden mit sämtlichen aufliegenden Lagerböden angehoben oder gehalten werden kann.

12. Lagereinrichtung nach Anspruch 11, **dadurch gekennzeichnet, dass** unter dem untersten Lagerboden eine Vorrichtung zum Stützen und Absenken des untersten Lagerbodens und der ggf. darauf aufliegenden, nicht von dem Hubarm gehaltenen Lagerböden vorgesehen ist.

13. Lagereinrichtung nach Anspruch 11, **dadurch gekennzeichnet, dass** der unterste Lagerboden ortsfest angeordnet ist und der Hubarm den ergriffenen Lagerboden und die ggf. darauf aufliegenden Lagerböden anhebt.

14. Lagereinrichtung nach einem der Ansprüche 11 - 13, **dadurch gekennzeichnet, dass** an dem Hubarm eine Führung für das Bediengerät angeordnet ist, so dass das Bediengerät in einer Ebene unterhalb des Hubarms unter den angehobenen oder gehaltenen Lagerboden verfahrbar ist.

15. Verfahren zum Einlagern und Auslagern von Stückgütern, wobei eine Lagereinrichtung verwendet wird, welche eine Mehrzahl von übereinander angeordneten Lagerböden mit ebenen Lagerflächen aufweist, mit den Schritten:
Bestimmen einer Lagerfläche eines Lagerbodens, auf welche zugegriffen werden soll, um wenigstens ein Stückgut darauf abzulegen oder von der Lagerfläche aufzunehmen,
Vergrößern des Abstandes des Lagerbodens dieser bestimmten Lagerfläche von dem unmittelbar darüber befindlichen Lagerboden, indem wenigstens einer der beiden Lagerböden vertikal verschoben wird, um einen Zugriffsraum über der bestimmten Lagerfläche des unteren der beiden Lagerböden zu schaffen, wobei sich der Zugriffsraum über den auf der bestimmten Lagerfläche ggf. lagernden Stückgütern ausbildet,
Positionieren eines Bediengeräts neben dem Zugriffsraum und Bewegen des Bediengeräts in den Zugriffsraum zwischen der bestimmten Lagerfläche und dem darüber befindlichen Lagerboden, so dass sich das Bediengerät zwischen den Lagerböden befindet,
Ablegen bzw. Aufnehmen wenigstens eines Stückgutes mit Hilfe des Bediengerätes, wobei auf das Stückgut von oben zugegriffen wird,
Herausbewegen des Bediengerätes aus dem Zugriffsraum, und
Verringern des Abstandes der bestimmten Lagerfläche von dem darüber befindlichen Lagerboden.

## Claims

1. A storage device for piece goods with a plurality of storage bases (4) with flat support surfaces arranged above one another, wherein a plurality of piece goods can rest next to one another on each storage surface, wherein the storage bases (4) are movable vertically by an actuator such that the vertical spacing between any two storage bases adjacent to one another in the vertical direction may be increased in order to create an access space above the support surface, which is occupied partially or completely by piece goods, of the lower of the adjacent storage bases, **characterised in that** at least one service device (20, 25, 26) is provided, which is positionable initially outside the storage bases adjacent to the access space and is then movable in the horizontal direction into the access space between the storage bases, wherein the service device (20, 25, 26) is constructed for access from above to the pieced goods resting or to be stored on the support surface of the lower of the adjacent storage bases.

2. A storage device as claimed in claim 1, **characterised in that** the service device is movable in the vertical direction adjacent one of the storage bases arranged vertically above one another in order to position it horizontally adjacent to the access space.

3. A storage device as claimed in claim 1 or 2, **characterised in that** each storage base is releasably coupled to a vertically adjacent storage base with the aid of connecting means.

4. A storage device as claimed in claim 3, **characterised in that** the connecting means of each of the storage bases are individually controllable to release the coupling so that the targeted separation of two selected storage bases is possible.

5. A storage device as claimed in claim 3 or 4, **characterised in that** the uppermost storage space is stationarily fixed in position.

6. A storage device as claimed in claim 5, **characterised in that** the lowermost storage base is supportable by a vertically movable support.

7. A storage device as claimed in one of claims 1 - 6, **characterised in that** the storage bases are vertically movable in a guide device.

8. A storage device as claimed in claim 7, **characterised in that** the movability of each of the storage bases with respect to the guide device may be blocked with locking means.

9. A storage device as claimed in claim 8, **characterised in that** the locking means are actuable by the service device.

10. A storage device as claimed in one of claims 1 - 9, **characterised in that** the storage bases are arranged in a stack such that all the storage bases with the exception of the lowermost storage base rest on a vertically adjacent storage base.

11. A storage device as claimed in claim 10, **characterised in that** a vertically movable lifting arm is provided, which is provided with means for gripping a storage base, so that the storage base can be lifted or supported with all the storage bases resting on it.

12. A storage device as claimed in claim 11, **characterised in that** provided below the lowermost storage base there is an apparatus for supporting and lowering the lowermost storage base and the storage bases which potentially rest on it and are not supported by the lifting arm.

13. A storage device as claimed in claim 11, **characterised in that** the lowermost storage base is stationarily arranged and the lifting arm raises the engaged storage base and the storage bases potentially resting on it.

14. A storage device as claimed in one of claims 11 -13, **characterised in that** arranged on the lifting arm is a guide for the service device so that the service device is movable in a plane below the lifting arm beneath the raised or supported storage bases.

15. A method of moving piece goods into and out of storage, in which a storage device is used which has a plurality of storage bases with flat support surfaces arranged above one another, including the following steps:
Determining a support surface of a bearing base which is to be accessed in order to deposit at least one piece good on it or to pick up at least one piece good from the support surface,
Increasing the distance of the storage base of this determined support surface from the storage base situated directly above it by moving at least one of the two storage bases vertically in order to create an access space above the determined support surface of the lower of the two storage bases, wherein the access space is defined above the piece goods potentially resting on the determined support surface,
Positioning a service device adjacent to the access space and moving the service device into the access space between the determined support surface and the bearing base situated above it so that the service device is located between the bearing bases,
Depositing or picking up at least one piece good with the aid of the service device, whereby the piece good is accessed from above,
Moving the service device out of the access space, and
Reducing the distance of the determined support surface from the bearing base situated above it.

## Revendications

1. Dispositif de stockage pour articles, comprenant une pluralité de paliers de stockage (4) superposés avec des surfaces de stockage planes, dans lequel on peut stocker une pluralité d'articles l'un à côté de l'autre sur chaque surface de stockage, dans lequel
les paliers de stockage peuvent être déplacés verticalement par un mécanisme de commande de sorte que la distance verticale entre deux paliers de stockage quelconques adjacents dans la direction verticale puisse être étendue pour créer un espace de saisie au-dessus de la surface de stockage, occupée partiellement ou complètement par des articles, du palier inférieur des paliers de stockage adjacents, **caractérisé en ce que**
il est prévu au moins un organe de commande (20, 25, 26) qui peut être positionné d'abord à l'extérieur des paliers de stockage à côté de l'espace de saisie et ensuite rentré dans l'espace de saisie dans la direction horizontale entre les paliers de stockage,
dans lequel l'organe de commande (20, 25, 26) est conformé pour une saisie par le haut des articles situés sur la surface de stockage du palier inférieur des paliers de stockage adjacents ou des articles à stocker.

2. Dispositif de stockage selon la revendication 1, **caractérisé en ce que** l'organe de commande peut être déplacé en direction verticale à côté d'une pile formée des paliers de stockage aménagés verticalement l'un au-dessus de l'autre pour la positionner horizontalement à côté de l'espace de saisie.

3. Dispositif de stockage selon la revendication 1 ou 2, **caractérisé en ce que** chaque palier de stockage est couplé de manière détachable à un palier de stockage verticalement adjacent à l'aide de moyens de raccordement.

4. Dispositif de stockage selon la revendication 3, **caractérisé en ce que** les moyens de raccordement de chaque palier de stockage peuvent être commandés individuellement pour dégager le couplage de sorte que la séparation de deux paliers de stockage choisis soit possible de manière appropriée.

5. Dispositif de stockage selon la revendication 3 ou 4, **caractérisé en ce que** le palier de stockage le plus haut est fixe.

6. Dispositif de stockage selon la revendication 5, **caractérisé en ce que** le palier de stockage le plus bas peut être maintenu par un appui réglable verticalement.

7. Dispositif de stockage selon l'une quelconque des revendications 1 à 6, **caractérisé en ce que** les paliers de stockage sont déplaçables verticalement dans un dispositif de guidage.

8. Dispositif de stockage selon la revendication 7, **caractérisé en ce que** la capacité de déplacement de chaque palier de stockage vis-à-vis du dispositif de guidage peut être bloquée par des moyens de blocage.

9. Dispositif de stockage selon la revendication 8, **caractérisé en ce que** les moyens de blocage sont actionnables par l'organe de commande.

10. Dispositif de blocage selon l'une quelconque des revendications 1 à 9, **caractérisé en ce que** les paliers de stockage sont empilés de sorte que tous les paliers de stockage, à l'exception du palier de stockage le plus bas, reposent sur un palier de stockage verticalement adjacent.

11. Dispositif de stockage selon la revendication 10, **caractérisé en ce qu'**il est prévu un bras de levage déplaçable verticalement, qui est pourvu de moyens de saisie d'un palier de stockage de sorte que le palier de stockage puisse être soulevé ou maintenu avec tous les paliers de stockage appliqués.

12. Dispositif de stockage selon la revendication 11, **caractérisé en ce que**, en dessous du palier de stockage le plus bas, il est prévu un dispositif d'appui et d'abaissement du palier de stockage le plus bas et des paliers de stockage éventuellement appliqués par-dessus et non maintenus par le bras de levage.

13. Dispositif de stockage selon la revendication 11, **caractérisé en ce que** le palier de stockage le plus bas est agencé fixe et **en ce que** le bras de levage soulève le palier de stockage saisi et les paliers de stockage éventuellement appliqués par-dessus.

14. Dispositif de stockage selon l'une quelconque des revendications 11 à 13, **caractérisé en ce qu'**un guidage pour l'organe de commande est agencé sur le bras de levage de sorte que l'organe de commande puisse être déplacé dans un plan au-dessous du bras de levage en dessous des paliers de stockage soulevés ou maintenus.

15. Procédé pour entreposer et évacuer des articles, dans lequel on utilise un dispositif de stockage qui présente une pluralité de paliers de stockage superposés avec des surfaces de stockage planes, comprenant les étapes consistant à :
déterminer une surface de stockage d'un palier de stockage, qui doit être saisie pour y déposer au moins un article ou pour le retirer de la surface de stockage,
étendre la distance entre le palier de stockage de cette surface de stockage et le palier de stockage se trouvant directement au-dessus en déplaçant verticalement au moins l'un des deux paliers de stockage pour créer un espace de saisie au-dessus de la surface de stockage déterminée du palier inférieur des deux paliers de stockage, l'espace de saisie étant formé au dessus des articles éventuellement stockés sur la surface de stockage déterminée,
positionner un organe de commande à côté de l'espace de saisie et déplacer l'organe de commande dans l'espace de saisie entre la surface de stockage déterminée et le palier de stockage se trouvant au-dessus de sorte que l'organe de commande se trouve entre les paliers de stockage,
déposer ou prélever au moins un article à l'aide de l'organe de commande, l'article étant saisi par le haut,
extraire l'organe de commande de l'espace de saisie, et
réduire la distance entre la surface de stockage déterminée et le palier de stockage se trouvant au-dessus.
